# EUROPEAN PATENT APPLICATION

(11) **EP 4 484 381 A1**
(43) Date of publication of application: **01.01.2025**
(21) Application number: 24180577.9
(22) Date of filing: 06.06.2024
(51) Int. Cl.: C02F 1/46, C02F 1/72, C02F 103/00

(54) **METHOD, SYSTEM AND ITS USE FOR REMOVAL AND/OR DEGRADATION OF MICRO-POLLUTANTS FROM A LIQUID**

(30) Priority: 30.06.2023 NL 2035237
(71) Applicant: Stichting Wetsus, European Centre of Excellence for Sustainable Water Technology, 8911 MA Leeuwarden (NL); Technische Universität Graz, 8010 Graz (AT)
(72) Inventor: Klymenko, Roman, 8911 MA Leeuwarden (NL); Woisetschläger, Jakob, 8911 MA Leeuwarden (NL); Hoeben, Wilhelmus Frederik Laurens Maria, 8911 MA Leeuwarden (NL); Fuchs, Elmar Christof, 8911 MA Leeuwarden (NL); Agostinho, Luewton Lemos Felicio, 8911 MA Leeuwarden (NL); Schauberger, Jörg Walther Otto, 8911 MA Leeuwarden (NL)
(74) Representative: Arnold & Siedsma

(57) **Abstract**

The present invention relates to method, a system, and its use for removal and/or degradation of micro-pollutants from a liquid. The method according to the invention comprises:
- providing a reactor having an inlet configured for receiving the liquid, an outlet configured for removing the treated liquid, and a treatment chamber having a substantially hyperbolic shape in a main flow direction of the liquid from the inlet to the outlet;
- providing a treatment device configured for generating a plasma for treating the liquid and having one or more electrodes;
- providing the liquid to the reactor;
- generating a vortex by liquid flow;
- generating a plasma with the treatment device;
- treating the liquid in the treatment chamber with the plasma to remove and/or degrade micro-pollutants from the liquid; and
- removing the treated liquid from the treatment chamber.

## Description

The present invention relates to a method for the removal and/or degradation of micro-pollutants from a liquid, such as wastewater. Such micro-pollutants may relate to pharmaceuticals, bacteria, pesticides, per- and polyfluoroalkyl substances (PFAS), and viruses. The liquid may relate to water and more specifically wastewater. For example, the liquid originates from a factory or other wastewater producing entity.

Accumulation of pharmaceutical residues and other micro-pollutants in wastewater in the environment has become a problem of growing concern. Some of these micro-pollutants are relatively easily biodegradable, however, other micro-pollutants are hardly decomposable and may pose a threat to the environment.

In practice, wastewater treatment plants are known to include biochemical processes under anaerobic and/or anaerobic conditions. Problems with many of these conventional wastewater treatment plants involve the required usage of chemicals and catalysts, ineffective and/or expensive treatments, and/or are only effective for relatively clear and/or clean process water.

An objective of the present invention is to provide a method for removal and/or degradation of micro-pollutants from a liquid that obviates or at least reduces one or more of the aforementioned problems and is more efficient and/or effective as compared to conventional methods and systems.

This objective is achieved with the method for removal and/or degradation of micro-pollutants from a liquid, the method comprising the steps of:
- providing a reactor having an inlet configured for receiving the liquid, an outlet configured for removing the treated liquid, and a treatment chamber having a substantially hyperbolic shape in a main flow direction of the liquid from the inlet to the outlet;
- providing a treatment device configured for generating a plasma for treating the liquid and having one or more electrodes;
- providing the liquid to the reactor;
- generating a vortex by liquid flow;
- generating a plasma with the treatment device;
- treating the liquid in the treatment chamber with the plasma to remove and/or degrade micro-pollutants from the liquid; and
- removing the treated liquid from the treatment chamber.

Micro-pollutants like undesired pharmaceuticals, bacteria, pesticides, per- and polyfluoroalkyl substances (PFAS), and viruses are present in liquids, more specifically in wastewaters from manufacturing plants and other wastewater producing entities such as hospitals. According to the invention such liquid with micro-pollutants is provided to a treatment chamber of a reactor, with the treatment chamber having a substantially hyperbolic shape as seen in a main flow direction of the liquid from the inlet to the outlet of the reactor. The treatment device is configured for generating a plasma for treating the liquid. This treatment removes and/or degrades a substantial amount of micro-pollutants from the liquid. By providing the substantially hyperbolic shape, the liquid flows through the reactor involving a so-called vortex flow. Preferably, the liquid flows through the reactor along a spiral path, thereby forming a so-called (liquid/water) vortex.

The treatment device with the electrodes is preferably connected to a high-voltage power supply that can be used for generating the plasma. In a presently preferred embodiment, the high-voltage power supply is capable of working with a constant, variable and pulsed signal. In addition, or as an alternative, the high-voltage power supply is preferably capable of changing the energy of the pulse and its repetition rate, as well as the polarity of the plasma discharge (positive, negative and/or bipolar).

The substantially hyperbolic shape provides a so-called funnel shape which is highly effective and obviates the need for a stirrer. In addition, the use of such hyperbolic shape prevents the generation of so-called dead zones in the reactor by generating a liquid vortex flow, wherein preferably gas is mixed with the liquid, and preferably dissolves in the liquid. Experiments have shown that this mixing effect can be improved by providing the inlet as a tangential inlet. The gas can be air or any other suitable gas. Optionally, a cylindrically shaped top part is provided.

Experiments have further shown that liquids comprising a relatively high amount of pharmaceuticals, such as wastewater from hospitals, can be effectively treated with the method according to the present invention. Furthermore, the combination of a hyperbolically shaped treatment chamber and providing a plasma was shown to be also very effective for degradation of certain chemicals, including per- and polyfluoroalkyl substances (PFASs) and pharmaceuticals.

In one of the presently preferred embodiments of the invention the method is applied to wastewater that is generated in a manufacturing plant or other entity, such as a hospital, before providing the (treated) liquid to a conventional wastewater channel. This renders the plasma treatment very effective and keeps dimensions of the hyperbolically shaped treatment chamber within practical boundaries. A further advantage is that the liquid to be treated is generally provided with a relatively high concentration of micro-pollutants, such as pharmaceuticals, thereby rendering the treatment even more effective. However, the method can actually be applied before, in the middle of, or after traditional wastewater treatment, depending on the conditions and/or application.

In a presently preferred embodiment, the method comprises the step of generating a bipolar pulse.

Application of a bipolar pulse in the plasma generation has shown a higher effect on the removal and/degradation of micro-pollutants from the liquid as compared to the use of a monopolar pulse.

Preferably, the bipolar pulse is generated between at least two of the electrodes, with the at least two electrodes having a different polarity in a gas medium with continued discharge across a gas-liquid interface. Also preferably, and more preferably in combination with generating the aforementioned bipolar pulse, the method further comprises the step of positioning the at least two electrodes above a liquid surface. This enables generating a discharge across a gas-liquid interface

In a presently preferred embodiment of the invention the method comprises the step of providing a voltage to one or more electrodes in the range of 2 kV to 50 kV, preferably in the range of 10 kV to 40 kV, and most preferably in the range of 20 kV to 30 kV.

By providing a high voltage in one of the aforementioned voltage ranges an effective plasma can be generated to enable an effective treatment of the liquid.

In a further preferred embodiment of the invention the method comprises the step of varying the energy of plasma pulses in the range of 0.5 mJ to 5 mJ.

By providing a plasma signal in aforementioned energy range an effective treatment of the liquid can be generated. Preferably, this energy range is applied in combination with the aforementioned voltage range.

In a further preferred embodiment of the invention the method comprises the additional step of adding a catalyst to the liquid.

By providing a catalyst to the liquid the removal and/or degradation of micro-pollutants from the liquid can be improved significantly. Different catalysts can be applied. One of the presently preferred catalysts comprises iron. One of the presently preferred iron catalysts comprises iron peroxide. Experiments have shown effective results when adding iron peroxide to the liquid.

In a further preferred embodiment of the invention the method comprises the step of performing a recirculation of the liquid.

Recirculating the liquid further improves the overall removal and/or degradation of micro-pollutants from the liquid, and more specifically reduces the amount of micro-pollutants in the treated liquid. Optionally, a part of the liquid is recirculated from the outlet back to the inlet for a repeated treatment. For example, 10 vol% to 90 vol% of the liquid is recirculated, preferably 25 vol% to 75 vol%, more preferably 40 vol% to 60 vol%, and most preferably about 50 vol% is recirculated.

In a further preferred embodiment of the invention the method further comprises the step of positioning the one or more electrodes above a liquid surface. This is preferably applied in combination with applying a high-voltage to the electrodes for generating a bipolar pulse.

When a high-voltage is applied to electrodes in a bipolar mode, and having the electrodes positioned above the liquid surface, a plasma channel is formed between the electrodes through the gas phase and the water surface. If the setup is in unipolar mode, then the plasma channel is formed between the electrodes and grounded water. During interaction, reactive nitrogen and oxygen species (RNS and ROS) (such as OH, O₃, H₂O₂, NO₂, NO₃, HNO₂, HNO₃ etc.) are created. These reactive species are responsible for the oxidation and degradation of micro-pollutant molecules. Further, the created species dissolve in the liquid with the assistance of the generated vortex (diffusion and advection) such that the fluid is mixed, due to secondary flows in the water volume, thereby increasing the area of direct contact of liquid with plasma, and improving the efficiency of adsorption of the reactive species.

In a further preferred embodiment, the method further comprises the step of adding a gas.

By adding a gas to the reactor, the mixing and also the generation of a vortex flow can be improved. Furthermore, the type and amount of generated oxidative species can be changed. In fact, in one of the presently preferred embodiments of the invention, the method comprises the step of selecting and applying a gas or gases to enable the use of different kinds of artificial atmospheres inside the reactor to achieve one or more of the aforementioned effects. Preferably, a turbulent airflow is generated and directed to the vortex core to increase the efficiency of the interaction between reactive gases and water. In addition, the saturation of the liquid with gases from the vortex core is significantly increased. A possible working gas can be air.

Optionally, the gas can be recirculated as a further step in the method according to be present invention. This further improves the overall efficiency of the method according to the present invention and allows the reuse of artificial atmospheres like, but not limited to, helium, helium oxygen mixtures, argon, argon oxygen mixtures, and other suitable atmospheres and gases.

By generating a plasma, reactive species are formed in the gas phase in the reaction chamber. Inside the liquid further reactive species are formed thereby generating plasma activated liquid. The reactive species are responsible for the removal and/or degradation of the micro-pollutants from the liquid. In some of the presently preferred embodiments of the invention, a combination of the reactive species with the generated electromagnetic radiation (especially in the UV range) and/or the shock wave created by the discharge are responsible for the removal and/or degradation of the micro-pollutants from the liquid.

In a further preferred embodiment of the invention, the method further comprises the step of dosing a surfactant, preferably a cationic surfactant, more preferably a quaternary ammonium salt, and most preferably benzethonium chloride.

Dosing a surfactant significantly improved degradation of components, such as PFAS. Preferably, the surfactant is dosed during plasma treatment. An effective surfactant includes benzethonium chloride (Hyamine^{®} 1622 4mM solution in H₂O).

The invention also relates to a liquid treatment device for removal and/or degradation of micro-pollutants from a liquid, with the treatment device comprising:
- a reactor having an inlet configured for receiving the liquid, an outlet configured for removing the treated liquid, and a treatment chamber having a substantially hyperbolic shape in a main flow direction of the liquid from the inlet to the outlet; and
- a treatment device configured for generating a plasma for treating the liquid and having one or more electrodes.

The treatment device provides the same effects and/or advantages as described for the method. In particular, the treatment device is configured for performing a method for removal and/or degradation of micro-pollutants from a liquid according to one of the embodiments of the invention. It is noted that the optional and/or preferred embodiments of the method can also be applied to the liquid treatment device and vice versa. The treatment device is preferably connected to a high voltage source.

Preferably, the inlet comprises a tangential inlet. This has the advantage that the forming of a vortex flow is significantly improved, and the overall efficiency of the treatment is increased.

In a further preferred embodiment, the liquid treatment device further comprises one or more capacitors that can be connected to the one or more electrodes. For example, in one of the presently preferred embodiments of the invention, an alternating current (AC) power supply is provided together with a transformer that is configured for converting an AC signal to a high-voltage signal. In this embodiment, preferably a rectifier is provided for converting AC to DC such that capacitors can be charged by the DC signal. The capacitors are connected to the one, two, three or more electrodes that involve one or more cathodes and anodes. Experiments have shown that this configuration provides an effective treatment device.

In a further preferred embodiment of the invention, in use, the distance between the one or more electrodes and the liquid surface is in the range of 0.1 mm to 30 mm, preferably in the range of 1 mm to 25 mm, more preferably in the range of 5 mm to 20 mm, and most preferably in the range of 10 mm to 15 mm.

By providing the electrodes at a small distance from the liquid, more specifically at a small distance from the gas-liquid interface, the liquid can be purified from micro-pollutants through this liquid-gas interface. In this embodiment high voltages are applied in one of the aforementioned ranges, such as in the range of 20 kV to 30 kV per electrode, and preferably in a frequency between 100 Hz 300 Hz. The actual distance between the electrodes and the water surface preferably depends on the voltage that is applied. For large scale applications, it is better to use a larger distance. This distance should preferably be greater than the water level fluctuations, so that the electrodes are not in direct contact with the water. Preferably, the distance is 15 mm to 20 mm, which corresponds to voltages of 20 kV to 30 kV and preferably at a repetition rate of 100 Hz to 300 Hz per electrode.

In a further preferred embodiment, the liquid treatment device further comprises a liquid recirculation system that is configured for recirculating at least a part of the liquid. With the liquid recirculation system, the overall efficiency of the liquid treatment can be significantly improved. Optionally, the liquid treatment device further comprises a gas inlet and optionally a gas recirculation system that is configured for recirculating at least a part of the (working) gas. By providing the gas inlet and the optional gas recirculation system, an effective and cost-efficient supply of gas to the liquid is provided. This further improves the overall efficiency of the plasma treatment in the treatment chamber having a substantially hyperbolic shape.

In a further preferred embodiment of the invention the liquid treatment device further comprises at least a second reactor, wherein the reactors are placed in a cascade system.

Placing multiple reactors in series in a cascade configuration enables performing several treatments in series. This further enhances the removal and/or degradation of micro-pollutants from a liquid.

The invention further also relates to the use of a liquid treatment device in an embodiment of the present invention for removal and/or degradation of micro-pollutants from a liquid.

This use provides the same or similar effects and/or advantages as those described in relation to the method and/or liquid treatment device. The use of the liquid treatment device preferably involves performing the method in an embodiment of the present invention.

According to a presently preferred embodiment of the invention the liquid treatment device is used for removal and/or degradation of pharmaceuticals from a liquid, such as wastewater from a hospital.

In another embodiment the liquid treatment device is used for removal and/or degradation of per- and polyfluoroalkyl substances (PFASs) from a liquid, for example when cleaning a terrestrial area from PFAS.

Further advantages, features and details of the invention are elucidated on the basis of preferred embodiments thereof, wherein reference is made to the accompanying drawings, in which:
- Figure 1 shows a schematic overview of the liquid treatment device and methods according to the invention;
- Figure 2 shows a top view of the device of figure 1;
- Figure 3 shows a possible embodiment of an electrical circuit of a pulsed high-voltage power supply that can be used in the device shown in figure 1;
- Figure 4A-C shows the production of reactive species in a single cycle, and applying the method according to the invention;
- Figure 5 shows the degradation of PFOS for different gas compositions when using the liquid treatment device according to the present invention;
- Figure 6 shows the degradation of a pharmaceutical such as paracetamol when using the liquid treatment device of the method of figure 1;
- Figure 7 shows the degradation of a pharmaceutical matrix using a liquid treatment device and method of figure 1;
- Figure 8A-B shows the degradation of PFOS in DI water under different plasma-atmospheric conditions and different concentrations;
- Figure 9A-B shows the degradation of PFBA in DI water under different plasma-atmospheric conditions and different concentrations;
- Figure 10A-B shows the PFAS matrix degradation in DI water in air atmosphere without and with surfactant dosing, respectively;
- Figure 11 shows PFAS degradation in contaminated groundwater; and
- Figure 12 schematically shows a cascade system of hyperbolic funnels (reactors).

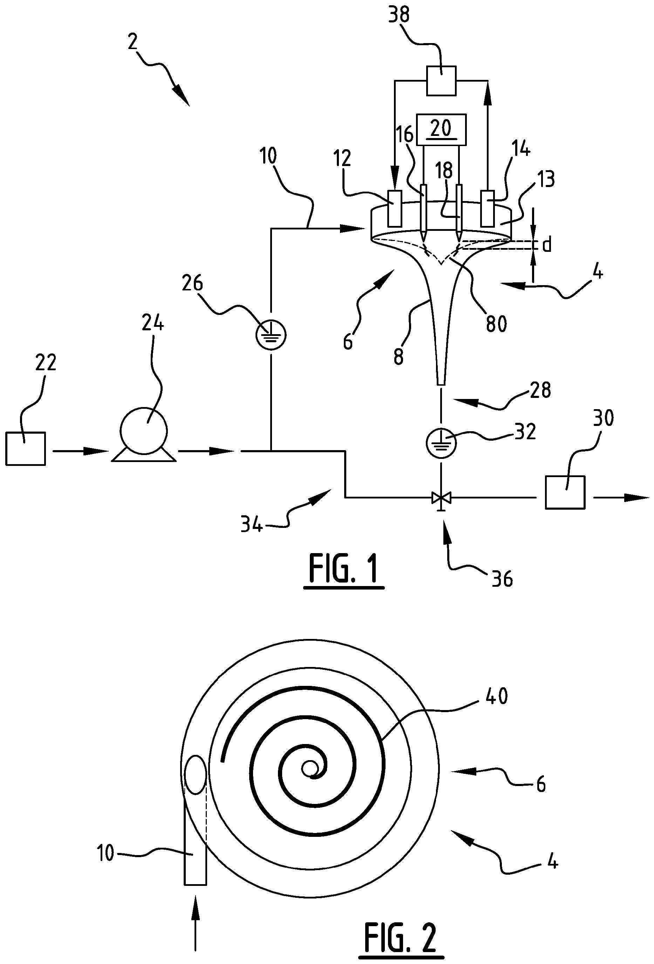

Liquid treatment device 2 (Figure 1) comprises reactor 4 having treatment chamber 6 comprising a hyperbolic shape 8. In addition, gas inlet 12 and gas outlet 14 are provided to reactor 4, and in the illustrated embodiment to cylindrically shaped top part 13 of reactor 4. Cathode 16 and anode 18 are provided in reactor 4 and are in use operatively connected to high voltage power supply 20. It will be understood that cathode 16 and anode 18 may represent any suitable number of electrodes.

Liquid to be treated originates from source 22, such as a wastewater production plant like a factory or hospital, and is pumped with pump 24 to inlet 10. Preferably, the liquid supply is grounded with grounding means 26. The hyperbolically shaped reaction chamber 6 ends at outlet 28 and provides the treated liquid to target location 30. Preferably grounding means 32 are provided for grounding liquid at outlet 28.

The treated liquid can be (partly) recirculated using recirculation system 34 that comprises valve system 36 (schematically illustrated in figure 1). Gas can be recirculated by gas recirculation system 38, optionally involving a gas treatment, that recirculates gas from gas outlet 14 to gas inlet 12.

In an illustrated embodiment inlet 10 is tangentially positioned (figure 2) relative to reactor 4 with reaction chamber 6. The tangential inlet 10 improves the generation of vortex 40.

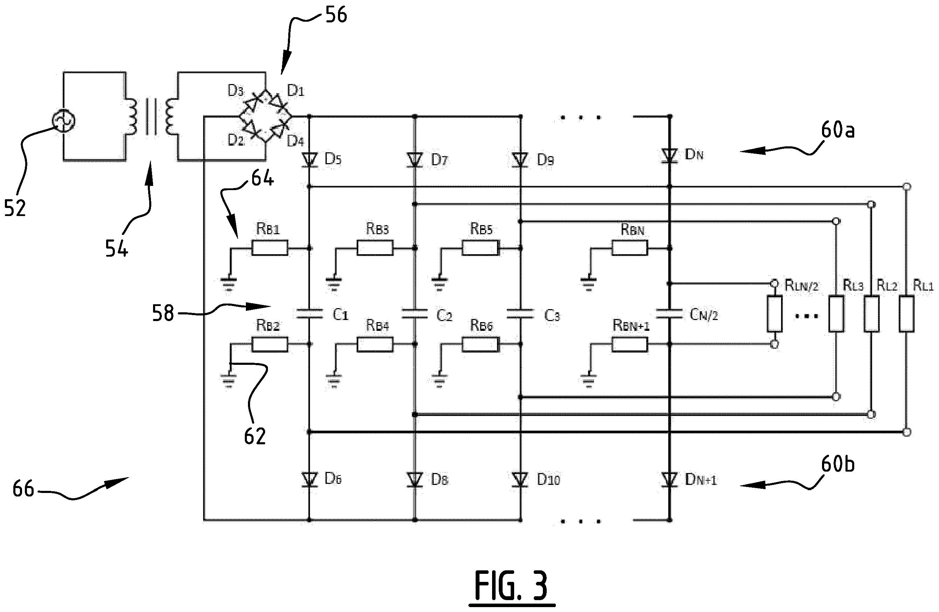

High voltage supply 20 can be embodied in different configurations. One of the possible embodiments will be briefly described and illustrated (figure 3).

Low voltage AC power supply 52 is connected to transformer 54, which converts the signal to a high-voltage. Bridge rectifier 56 (D1, D2, D3, D4) converts the AC signal into a DC signal, which allows to charge the capacitors 58 (C1, C2, C3, ... CN/2) that are connected to cathodes 16 and anodes 18. Preferably, additional diodes 60a,b (D5, D6, D7, D8, D9, D10, ... DN, DN+1) on both sides of capacitors 58 prevents direct contact, such that electrodes 16, 18 are independent of each other. For safety reasons, capacitors 58 are connected to grounding means 62 through bleeder resistors (RB1, RB2, RB3, RB4, RB5, RB6, ... RBN, RBN+1). This allows capacitor 58 to be quickly discharged to avoid incidents. This configuration makes it also possible to connect as many capacitors 58 and, accordingly, electrodes 16, 18 to circuit 66 as needed. Optionally, it also allows to work with two polarities at the same time (the electrode connected to one part of the capacitor is cathode 16, and the other is anode 18). Optionally, circuit 66 also allows to work with one polarity, if one side of capacitor 58 is grounded. In addition, connection of electrodes 16, 18 to bridge rectifier 56 makes it possible to work with different DC polarities. Connection of electrodes 16, 18 to high-voltage transformer 54 allows to work with an AC signal.

In another embodiment resistors (RB1, RB2, RB3, RB4, RB5, RB6, ... RBN, RBN+1) are removed from the system. Without these resistors, the efficiency could be higher as there are no substantial ground losses. However, such embodiment may lead to an additional safety hazard and, therefore resistors (RB1, RB2, RB3, RB4, RB5, RB6, ... RBN, RBN+1) are presently preferred. A further possible embodiment may involve a switch (not shown) which is activated/turned on after operation, wherein resistors (RB1, RB2, RB3, RB4, RB5, RB6, ... RBN, RBN+1) are separated by such switch.

In the illustrated embodiment the liquid is grounded with grounding means 26, 32 on both sides of the funnel 6 for safety and/or to enable working in unipolar mode. When the voltage put on capacitors 58 reaches the required value, a breakdown is initiated between electrodes 16, 18 if working with two polarities, or between electrode 16 or 18 and the grounded water surface if working with one polarity.

In the presently preferred embodiment, electrodes 16, 18 are placed above liquid surface 80. Vortex 40 is generated in funnel 8 when liquid is being pumped into it. When a high-voltage is applied to electrodes 16, 18 in the bipolar mode, a plasma channel is formed between electrodes 16, 18 through the gas phase and the water surface. If the setup is in unipolar mode, then the plasma channel is formed between electrodes 16, 18 and grounded water. During this interaction, reactive nitrogen and oxygen species (RNS and ROS) (such as OH, Os, H₂O₂, NO₂, NO₃, HNO₂, HNO₃ etc.) are created. These reactive species are needed for the oxidation and degradation of micro-pollutant molecules. Further, the created species dissolve in the liquid with the assistance of vortex 40 (diffusion and advection). Vortex 40 effectively mixes the fluid, due to secondary flows in the water volume, thereby increasing the area of direct contact of liquid with plasma, and improves the efficiency of adsorption of the reactive species.

Optionally, electrolysis, shock waves and ultraviolet radiation also occur. Some micro-pollutants dissociate from direct contact with plasma and contribute to the degradation.

By changing the plasma pulse energy, atmosphere, polarity, power and flow rate of pumped water into the funnel (water vortex regime), it is possible to control the treatment efficiency, the concentration and type of reactive species both created in the air phase and absorbed by water.

With circuits 66 and liquid treatment device 2 experiments have been performed. In one of these experiments the production of reactive species one cycle of passing the liquid through reactor 4 is measured. In the experiment, polarity of the plasma discharge is varied between positive, negative and bipolar. In the experiments the liquid flow rate is 75 to 78 l/h in a twisted vortex regime (TS) and 90 to 100 l/h in a straight vortex regime (SS).

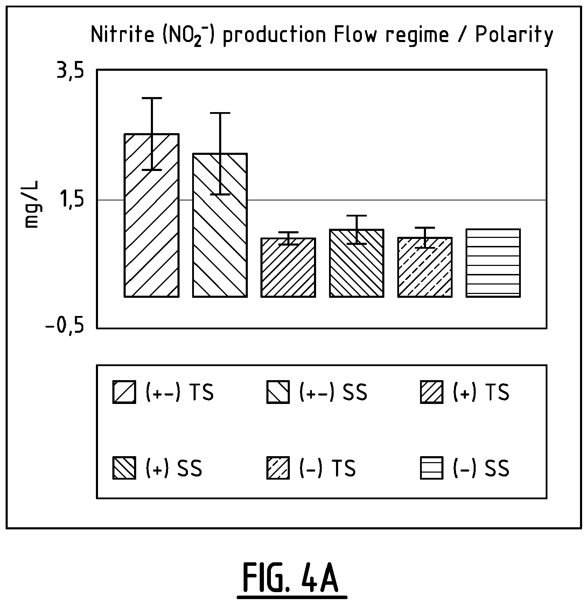

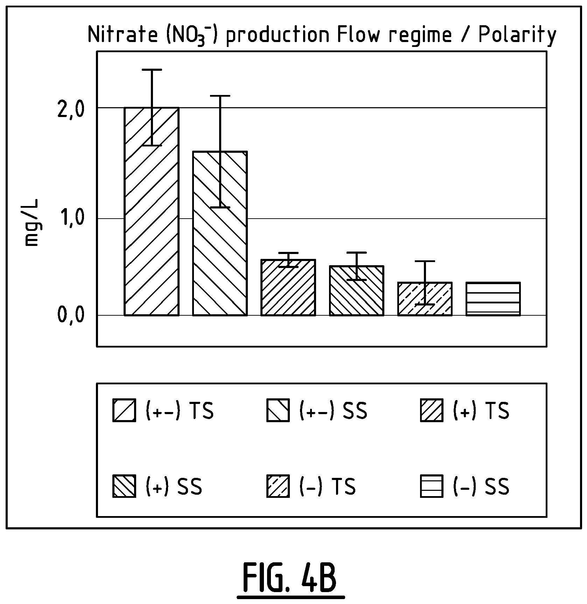

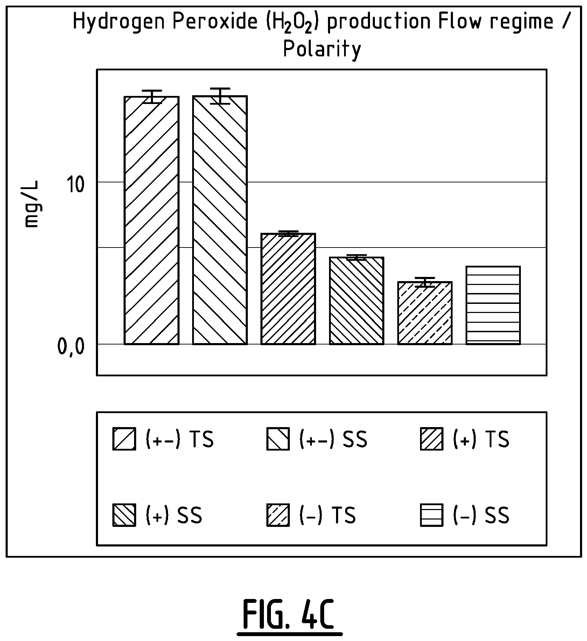

To monitor the production of reactive species depending on the plasma-hydraulic regime, the three most stable of them were selected, namely nitrite (NO₂), nitrate (NO₃) and hydrogen peroxide (H₂O₂) (Figure 4A-C). As a result, it was concluded that for one cycle of water passage through the reactor, the bipolar mode is the most efficient in these experiments, since it produces the largest number of reactive species in comparison with the monopolar modes, spending about the same amount of energy.

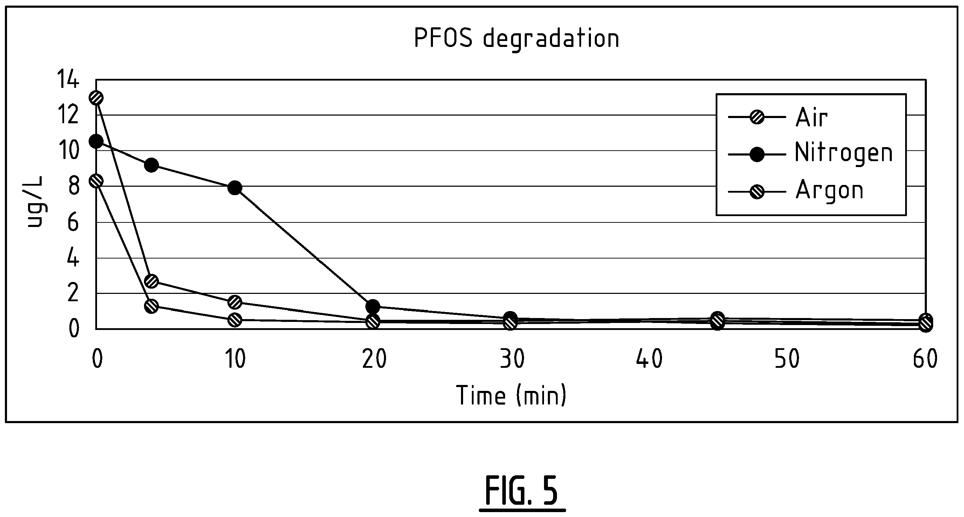

In a further experiment degradation of perfluorooctane sulphonic acid (PFOS), which is one of the group of per- and polyfluoroalkyl substances (PFASs) to which is also referred to as perfluoro chemicals (PFCs), has been tested. Results (Figure 5) are shown for different experiments using reactive species such as nitrite (NO₂), nitrate (NO₃) and hydrogen peroxide (H₂O₂) in a respective air, argon and nitrogen environment.

As can be seen from Figure 5, the most efficient degradation is achieved in an argon atmosphere, followed by air and then nitrogen. As a function of time, in all three atmospheres (20-60 minutes), the degradation of PFOS reached 96-98%.

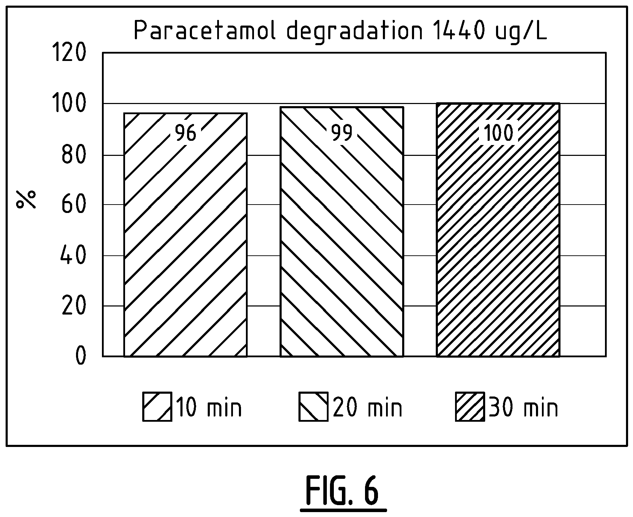

In another experiment the degradation of paracetamol was tested using a bipolar pulsed plasma discharge under air atmosphere (Figure 6). For the degradation of pharmaceuticals, a sample was prepared with a huge concentration of paracetamol (1440 µg/L) and treated with a bipolar plasma discharge (Figure 6). As a result of 30 minutes of treatment, a degradation of 100% was achieved.

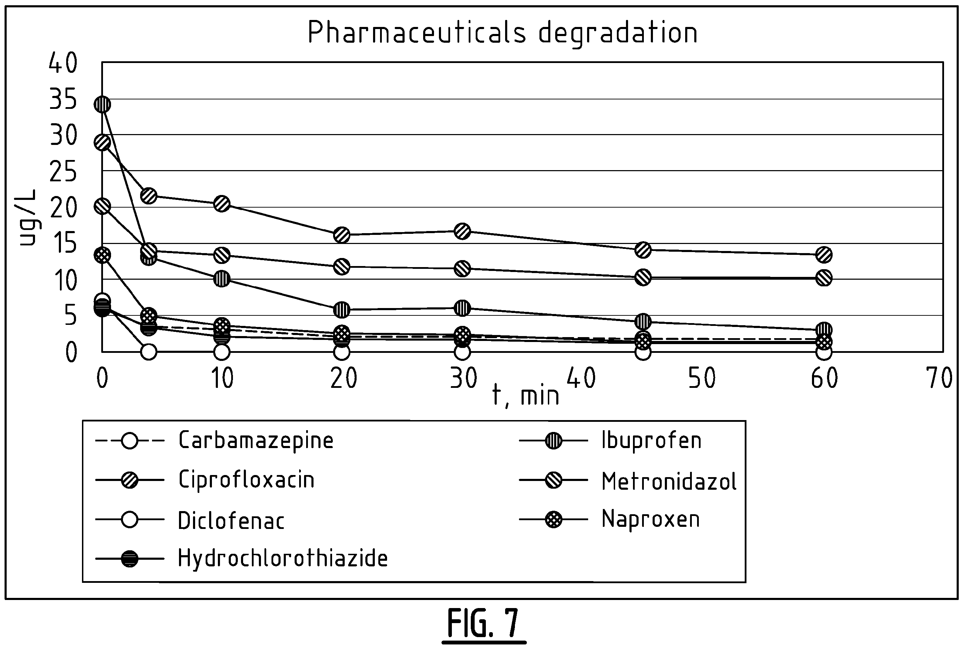

In another experiment the degradation of a pharmaceutical matrix using a bipolar pulsed plasma discharge under air atmosphere was tested (Figure 7). Afterwards, for the degradation of pharmaceutical matrix (Figure 7), a sample was diluted with one of the most persistent medicines. Some less stable pharmaceuticals such as diclofenac have also been added to further monitor setup performance. The concentration of pharmaceuticals was chosen similar to concentration in real hospital wastewater. In this case, depending on the time (4-60 minutes), the total degradation varies from 53 to 77 %.

In the method according to the invention liquid is pumped from source 22 with pump 24 to (tangential) inlet 10 of reactor 4. Reactor chamber 6 is provided with hyperbolic shape 8 such that, in use, vortex 40 is created. With high voltage source 20 being connected in the illustrated embodiment to a number of electrodes 16, 18, a plasma discharge can be generated, wherein electrodes 16, 18 are provided just above the gas liquid surface in the illustrated reactor 4. The gas liquid surface is schematically illustrated with reference number 80 (Figure 1). Electrodes 16, 18 are provided at distance d from surface 80. Optionally, additional gas is supplied through inlet 12. Furthermore, liquid and/or gas can be recirculated with the respective recirculation systems 34, 38. With a plasma discharge, reactive species are generated and micro-pollutants are removed or degraded from the liquid. Optionally, other treatments can be included in the plasma treatment and/or can be applied in combination with plasma treatment, such as electrolysis, shock waves and ultraviolet radiation. The treated liquid is provided to the target location 30. Optionally, the treated liquid is treated further in post-treatment operations.

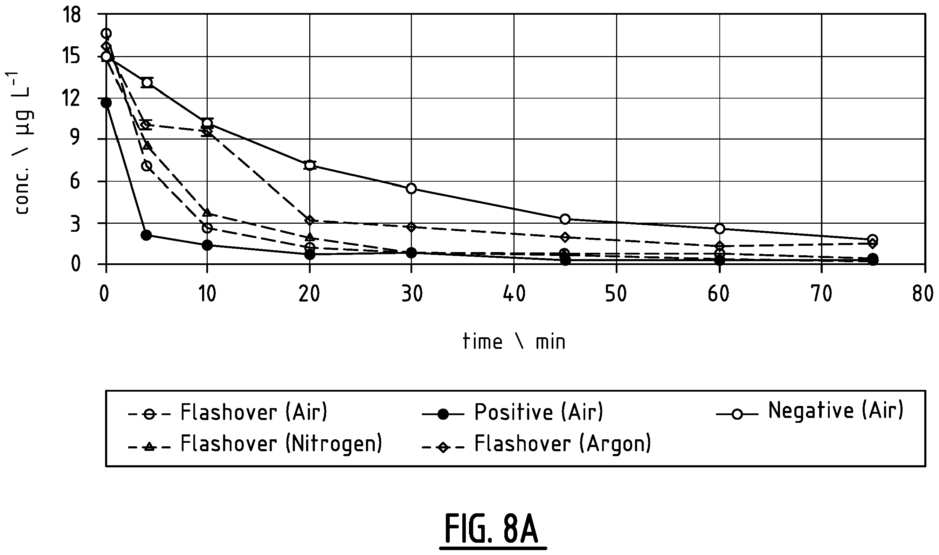

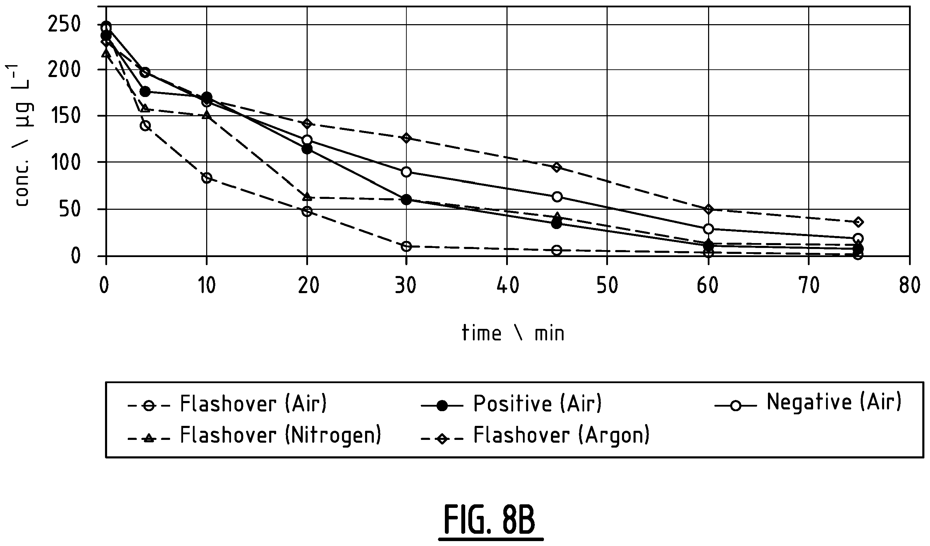

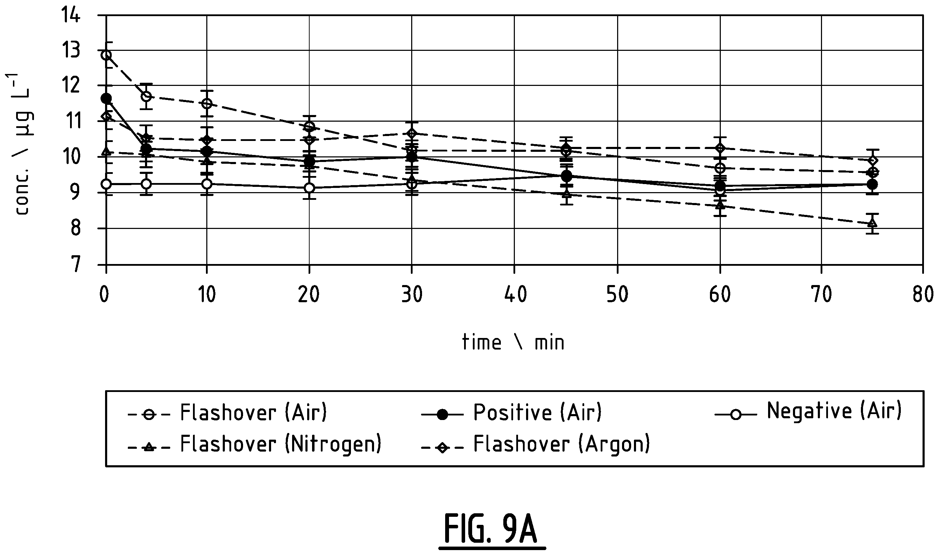

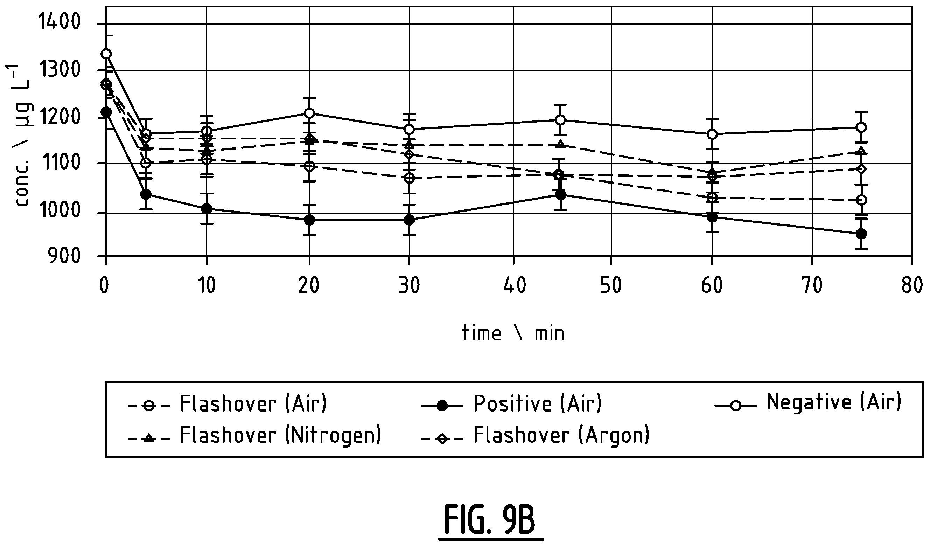

In other experiments the degradation of long-chain PFOS and short-chain PFBA was compared at different polarities and atmospheres in the reactor (Figures 8A-B and 9A-B). It was shown that the long-chain PFOS molecules degraded faster. The best results were obtained for flashover (bipolar) and high PFOS concentration. The degradation of PFBA molecules was very negligible and occurred mainly at the beginning of the treatment. This may be due to their lower hydrophobicity, resulting in fewer PFBA molecules accumulating on the water surface, close to the plasma discharge, which slows down degradation.

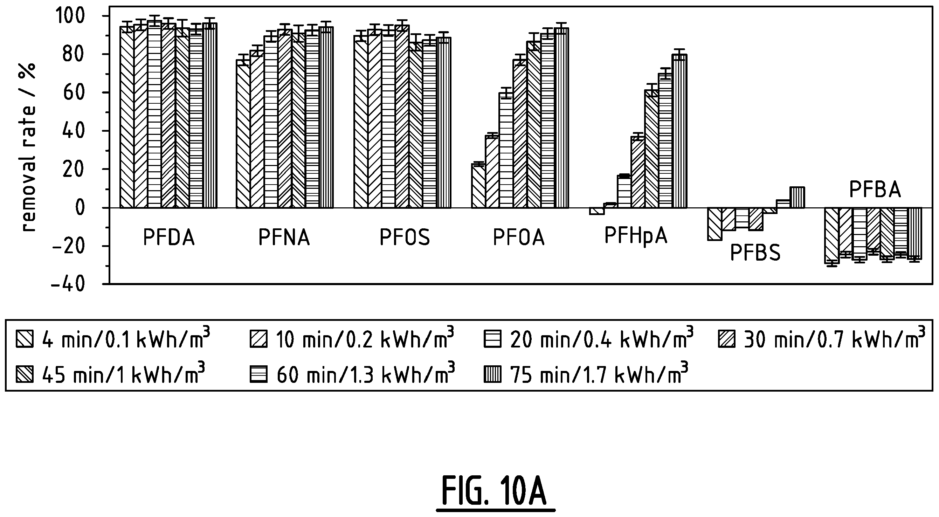

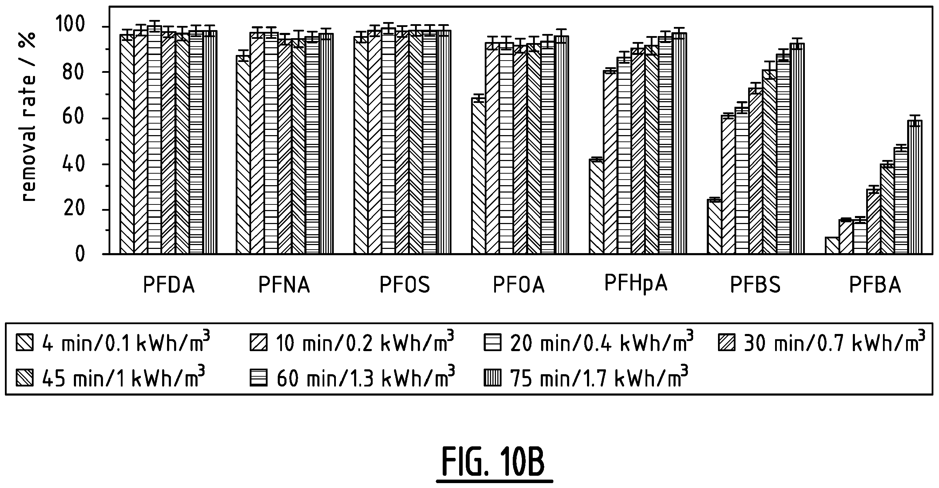

In experiments a PFAS matrix having PFAS molecules with different chain lengths was treated under different atmospheric parameters. It was found that if in the experiments a cationic surfactant, such as benzethonium chloride (Hyamine^{®} 1622 4mM solution in H₂O), was continuously dosed at a flow rate of 1 ml/min during plasma treatment, the degradation of PFAS was significantly improved (Figure 10A-B in air atmosphere). Long-chain PFASs was degraded faster when compared to short-chain PFASs. The negative removal rate of short-chain PFASs means that more short-chain molecules were produced as the treatment process decomposed the larger molecules into shorter molecules. When comparing all atmospheres tested (air, 80% argon-20% oxygen, argon, and nitrogen atmospheres), the best performance was obtained for the surfactant dosed air atmosphere.

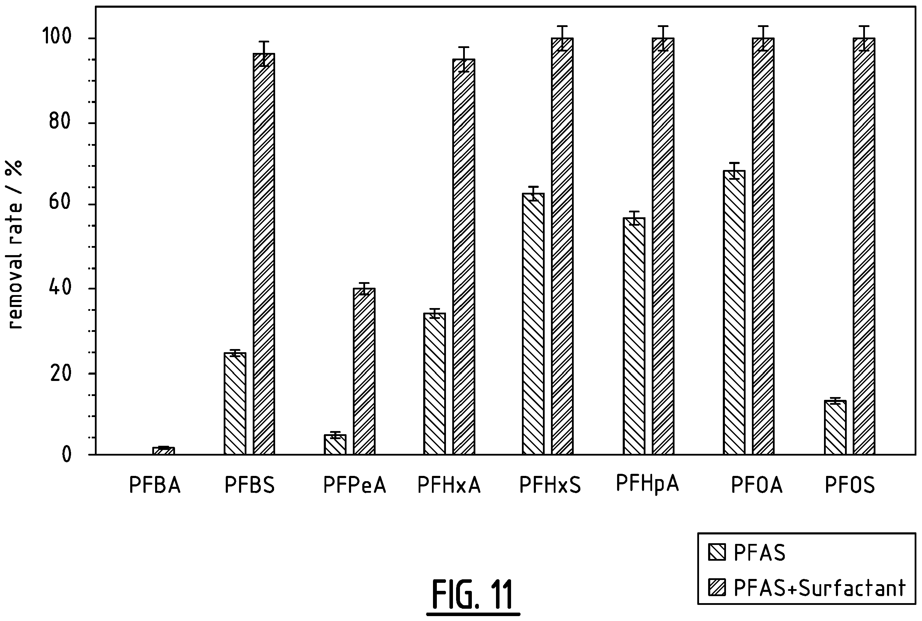

In further experiments a 75 min treatment of a real groundwater sample contaminated with PFAS was performed, with and without dosing of surfactant. Surfactant dosing significantly improves degradation (Figure 11).

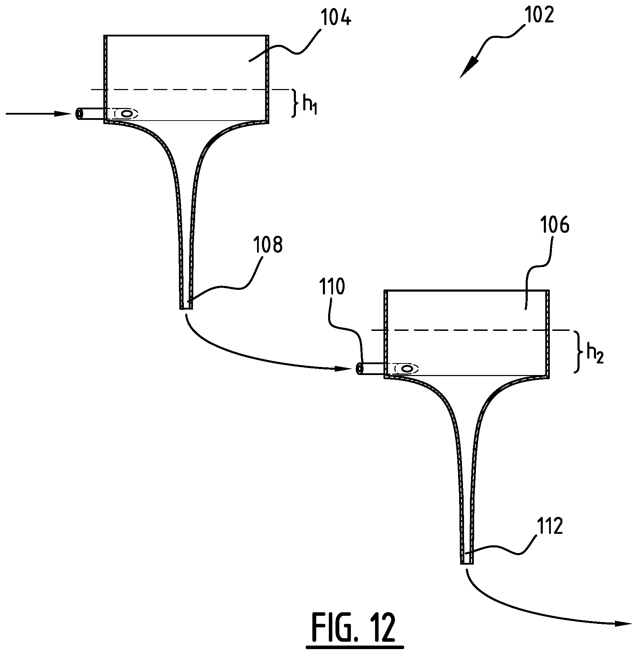

Further experiments were conducted with a system 102 having two funnels 104, 106 that were connected in a cascade configuration (Figure 12), wherein output 108 of first funnel 104 is connected to input 110 of second funnel 106. Output 112 of second funnel 106 can be the system output or can be connected to further funnels. System 102 was tested with different flow rates, including a flow rate of 1.7 l/min, wherein first funnel 104 has a(n) (average) liquid height hi of about 1.0 cm, and second funnel 106 has a(n) (average) liquid height h₂ of about 2.0 cm. This cascade-system showed the possibility of forming a stable vortex in both funnels for possible aeration and degradation of micropollutants. The system was successfully stabilized which proves the possibility of working with such cascade system, optionally comprising a larger number of funnels.

The present invention is by no means limited to the above-described preferred embodiments and/or experiments thereof. The rights sought are defined by the following claims within the scope of which many modifications can be envisaged.

## Claims

1. Method for removal and/or degradation of micro-pollutants from a liquid, the method comprising the steps of:
- providing a reactor having an inlet configured for receiving the liquid, an outlet configured for removing the treated liquid, and a treatment chamber having a substantially hyperbolic shape in a main flow direction of the liquid from the inlet to the outlet;
- providing a treatment device configured for generating a plasma for treating the liquid and having one or more electrodes;
- providing the liquid to the reactor;
- generating a vortex by liquid flow;
- generating a plasma with the treatment device;
- treating the liquid in the treatment chamber with the plasma to remove and/or degrade micro-pollutants from the liquid; and
- removing the treated liquid from the treatment chamber.

2. Method according to the foregoing claim, wherein the liquid is a wastewater flow.

3. Method according to one or more of the foregoing claims, further comprising the step of generating a bipolar pulse.

4. Method according to the foregoing claim, wherein the bipolar pulse is generated between at least two electrodes having a different polarity in a gas medium with continued discharge across a gas-liquid interface, and further preferably comprising the step of positioning the at least two electrodes above a liquid surface.

5. Method according to one or more of the foregoing claims, further comprising the step of providing a voltage to the one or more electrodes in the range of 2 kV to 50 kV, preferably in the range of 10 kV to 40 kV, and most preferably in the range of 20 kV to 30 kV, and/or
further comprising the step of varying the energy of plasma pulses in the range of 0.5 mJ to 5 mJ.

6. Method according to one or more of the foregoing claims, further comprising the step of adding a catalyst to the liquid, wherein the catalyst preferably comprises iron, more preferably iron peroxide.

7. Method according to one or more of the foregoing claims, further comprising the step of performing a recirculation of the liquid.

8. Method according to one or more of the foregoing claims, further comprising the step of adding a gas, and further preferably comprising the step of performing a recirculation of the gas.

9. Method according to one or more of the foregoing claims, further comprising the step of dosing a surfactant, preferably a cationic surfactant, more preferably a quaternary ammonium salt, and most preferably benzethonium chloride.

10. Liquid treatment device for removal and/or degradation of micro-pollutants from a liquid, the treatment device comprising:
- a reactor having an inlet configured for receiving the liquid, an outlet configured for removing the treated liquid, and a treatment chamber having a substantially hyperbolic shape in a main flow direction of the liquid from the inlet to the outlet; and
- a treatment device configured for generating a plasma for treating the liquid and having one or more electrodes.

11. Liquid treatment device according to the foregoing claim, wherein the inlet comprises a tangential inlet.

12. Liquid treatment device according to one of the foregoing claims 10-11, further comprising one or more capacitors that can be connected to the one or more electrodes, and/or wherein, in use, the distance between the one or more electrodes and the liquid is in the range of 0.1 mm to 30 mm, preferably in the range of 1 mm to 25 mm, more preferably in the range of 5 mm to 20 mm, and most preferably in the range of 10 mm to 15 mm.

13. Liquid treatment device according to one of the foregoing claims 10-12, further comprising a liquid recirculation system configured for recirculating at least a part of the liquid and/orfurther comprising a gas inlet, and further preferably comprising a gas recirculation system configured for recirculating at least a part of a gas.

14. Liquid treatment device according to one of the foregoing claims 10-13, further comprising at least a second reactor, wherein the reactors are placed in a cascade configuration.

15. Use of a liquid treatment device according to one of the foregoing claims 10-14 for removal and/or degradation of micro-pollutants from a liquid.
